Europäisches Patentamt

European Patent Office

Office européen des brevets

(19)

(11) Numéro de publication: **0 271 469 B1**

(12) **FASCICULE DE BREVET EUROPEEN**

(45) Date de publication de fascicule du brevet:
04.09.91

(51) Int. Cl.⁵: **B23K 26/08**, C21D 9/38,
B23K 26/00

(21) Numéro de dépôt: 87870167.1

(22) Date de dépôt: 04.12.87

(54) Procédé pour former des microperforations à la surface d'un cylindre de laminoir.

(30) Priorité: 08.12.86 LU 86705

(43) Date de publication de la demande:
15.06.88 Bulletin 88/24

(45) Mention de la délivrance du brevet:
04.09.91 Bulletin 91/36

(84) Etats contractants désignés:
AT BE DE FR GB IT NL SE

(56) Documents cités:
EP-A- 0 119 182          DE-A- 2 719 275
FR-A- 2 224 257          FR-A- 2 404 048
GB-A- 2 040 824          US-A- 3 742 182
US-A- 3 842 372          US-A- 4 609 807

(73) Titulaire: CENTRE DE RECHERCHES METAL-
LURGIQUES CENTRUM VOOR RESEARCH IN
DE METALLURGIE Association sans but lucratif
Vereniging zonder winstoogmerk Rue Montoyer, 47
B-1040 Bruxelles(BE)

(72) Inventeur: Crahay, Jean
307, Ster
B-4878 Francorchamps(BE)

(74) Mandataire: Lacasse, Lucien Emile et al
CENTRE DE RECHERCHES METALLURGI-
QUES Abbaye du Val-Benoît 11, rue Ernest
Solvay
B-4000 Liège(BE)

## Description

La présente invention concerne un procédé pour former des microperforations à la surface d'un cylindre de laminoir.

On sait que la rugosité superficielle d'un produit laminé en acier lui est, dans une large mesure, conférée par les cylindres équipant la dernière cage de laminage de ce produit. Le phénomène de transmission de la rugosité revêt un intérêt tout particulier dans le cas des tôles minces laminées à froid, pour lesquelles la rugosité conditionne largement plusieurs propriétés telles que l'aptitude à l'emboutissage et l'adhérence de la peinture.

On connaît déjà, notamment par le brevet BE-A-880.996, un procédé du type précité, dans lequel les microperforations, appelées aussi microcratères, sont effectuées au moyen d'un faisceau laser continu rendu intermittent par un disque rotatif ajouré, appelé disque diviseur ou hacheur. Le cylindre est mis en rotation autour de son axe, et le faisceau laser se déplace le long de celui-ci, de sorte que le point d'impact du faisceau décrit une hélice le long de laquelle sont réparties les microperforations.

On peut rappeler que, dans ce procédé, chaque impulsion du faisceau laser intermittent cède son énergie à son point d'impact sur la surface du cylindre. Cet apport brusque d'une quantité relativement importante d'énergie provoque l'échauffement du métal dans une zone entourant le point d'impact, la fusion d'une partie de ce métal et même la vaporisation d'une portion du métal fondu. Au-dessus du métal fondu, il se forme un plasma constitué d'ions du métal vaporisé, ainsi que de gaz environnants. Ce plasma exerce sur le métal fondu une certaine pression qui provoque son refoulement. Cet effet de refoulement peut encore être accentué par l'action d'un jet d'oxygène insufflé dans la zone d'impact pour améliorer la fusion du métal. Le refoulement du métal fondu au-delà de la périphérie de la zone fondue fait apparaître un microcratère dans la surface; par ailleurs, le métal fondu ainsi refoulé parvient dans une zone moins chaude entourant le microcratère précité et il se solidifie en un bourrelet entourant ce microcratère.

La rugosité dont il est question dans la présente demande, à savoir la rugosité arithmétique moyenne Ra dont la définition est normalisée, est déterminée par les dimensions des microcratères et des bourrelets évoqués plus haut.

Ce procédé antérieur donne généralement des résultats satisfaisants en matière de formation des microcratères. Il est cependant handicapé par le fait qu'il nécessite l'emploi d'un disque diviseur pour rendre le faisceau intermittent. Il en résulte d'une part une complication de l'installation et d'autre part une perte substantielle, usuellement de l'ordre de 50 %, de l'énergie du faisceau laser. Par ailleurs, dans un disque diviseur donné, les dimensions des fenêtres ainsi que les distances qui les séparent sont fixes et ne permettent aucun réglage de la durée d'une impulsion par rapport à la durée totale d'un cycle.

Il avait été suggéré, en particulier dans le brevet BE-A-870.609, d'utiliser un faisceau laser pulsé à haute fréquence et de puissance élevée, pour réaliser les microperforations désirées. Une telle utilisation n'était cependant pas possible dans la pratique, car on ne disposait pas alors de sources de faisceau laser pulsé suffisamment stables pour les besoins du traitement.

Depuis quelque temps, il est apparu des sources de faisceau laser pulsé avec une fréquence pouvant varier de 5000 Hz à 200.000 Hz environ et présentant, au cours du temps une stabilité telle que les fluctuations de la fréquence ne dépassent pas 2 %.

La présente invention est basée sur l'utilisation d'un faisceau laser pulsé d'un type précité. Elle porte sur un procédé qui permet de régler dans une large mesure et de façon simple, la dimension et la forme des microcratères.

Au cours de ses travaux expérimentaux, le Demandeur a en effet constaté que non seulement la forme, mais aussi la dimension d'un microcratère étaient directement influencées non par la durée absolue du cycle laser, mais par la durée relative de l'impulsion par rapport à la durée du cycle qui la contient. Un cycle d'impulsion, qui correspond en fait à la période du faisceau laser pulsé, a une durée $Tc$ qui est la somme du temps d'impulsion $Ti$ proprement dit et du temps de repos $Tr$ qui sépare la fin d'une impulsion du début de la suivante. Il est apparu que le facteur important pour la forme et la dimension d'un microcratère n'était pas la durée $Tc$ du cycle d'impulsion, mais le rapport $Ti/Tc$. A cet égard, il faut préciser qu'au sens de la présente demande, le temps $Ti$ assure la transmission de la quantité totale d'énergie d'une impulsion. Dans des conditions opératoires données, la quantité d'énergie est identique pour chaque impulsion et la puissance d'une impulsion est dès lors d'autant plus élevée que la durée $Ti$ est plus courte.

Il est connu, par le document DE-A1-2719275, de creuser des trous dans un cylindre d'imprimerie, par enlèvement de matière au moyen d'un faisceau laser pulsé. Ce procédé utilise soit un nombre variable d'impulsions, soit une seule impulsion de durée variable, en fonction de la profondeur du trou à réaliser. Les cylindres obtenus ont une surface lisse avec des trous dont les bords sont nets.

Le document FR-A-2224257 décrit un procédé de perçage de trous dans une feuille mince pour une installation de filtrage, au moyen d'un faisceau laser pulsé dont les impulsions sont séparées par une durée au moins 100 fois supérieure à la durée d'une impulsion.

Le procédé qui fait l'objet de la présente invention pour former des microperforations à la surface d'un cylindre de laminoir à l'aide d'un faisceau laser pulsé, dans lequel chaque impulsion dudit faisceau laser provoque, par fusion locale de la surface dudit cylindre et refoulement du métal fondu, la formation d'une microperforation constituée d'un bourrelet en relief entourant un microcratère, est caractérisé en ce que chaque impulsion dudit faisceau contient une même quantité d'énergie et en ce que l'on règle la durée (Ti) des impulsions dudit faisceau laser à une valeur comprise entre environ 3 % et environ 60 % de la durée totale (Tc) d'un cycle dudit faisceau laser.

Cette condition permet de contrôler la forme et la dimension des microcratères.

A énergie totale égale, une impulsion de courte durée présente une puissance élevée. En raison de sa courte durée, une telle impulsion donne naissance à un cratère plus rond; par contre, le bourrelet n'est pas très marqué parce que la puissance élevée de l'impulsion provoque une vaporisation plus prononcée du métal de la surface. Il a été trouvé que la valeur de Ti/Tc = 0,03 constituait une limite inférieure sous laquelle on n'obtient pas une rugosité suffisante.

Au contraire, une impulsion de longue durée présente une puissance moindre et donne naissance à un bourrelet plus marqué. Au-delà d'un rapport Ti/Tc = 0,60, on observe cependant une nette ovalisation du microcratère et la formation presque systématique d'un bourrelet asymétrique. La rugosité qui en résulte n'est dès lors pas isotrope.

Dans ces conditions, l'invention propose de modifier la texture formée à la surface d'un cylindre en réglant la valeur du rapport Ti/Tc du faisceau laser pulsé.

Suivant un autre mode de mise en oeuvre du procédé de l'invention, on insuffle dans la zone d'impact du faisceau laser pulsé un jet d'oxygène suivant une direction parallèle à l'axe dudit faisceau laser pulsé.

Ce jet d'oxygène est avantageusement coaxial audit faisceau laser pulsé; il peut également être pulsé.

Une telle insufflation d'oxygène est possible en raison de l'absence de disque hacheur qui, dans les installations existantes, était généralement disposé dans le cône de focalisation du faisceau laser, c'est-à-dire à proximité de la surface à traiter.

Suivant encore un autre mode de mise en oeuvre du procédé de l'invention, on ajoute à la puissance émise par la source laser pendant le temps d'impulsion (Ti) au moins une partie de la puissance de ladite source non transmise pendant le temps de repos (Tr).

Un faisceau laser pulsé est engendré par une source d'émission laser qui est généralement alimentée de façon continue en énergie électrique. Cette alimentation n'est dès lors pas interrompue pendant les temps de repos (Tr), mais l'énergie fournie pendant ces temps de repos n'est pas utilisée pour engendrer un faisceau laser.

La présente variante propose d'emmagasiner cette énergie non utilisée pendant un temps de repos (Tr) et de la restituer, pendant le temps d'impulsion (Ti) suivant, au système générateur de l'impulsion laser. Cette énergie peut être emmagasinée sous forme électrique, en particulier par charge d'un condensateur qui se décharge ensuite pendant le temps d'impulsion suivant; elle peut également être accumulée sous une autre forme et être réutilisée pour accentuer le phénomène donnant naissance au faisceau laser.

Le gain de puissance des impulsions obtenu par cette méthode varie évidemment en fonction de la valeur du rapport Ti/Tc. Avec un rapport Ti/Tc = 0,50, on peut atteindre un gain de puissance supérieur à 50 %.

Le procédé de l'invention va maintenant être illustré par trois exemples de réalisation correspondant à différentes valeurs du rapport Ti/Tc.

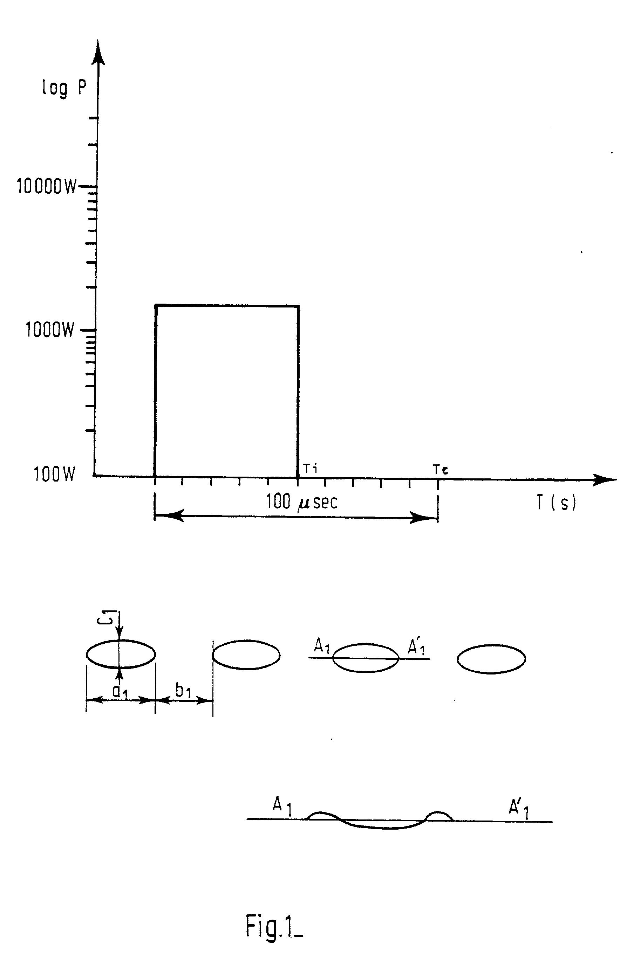

Ces exemples se réfèrent aux dessins annexés, dans lesquels les figure 1, figure 2 et figure 3 représentent, respectivement pour chaque valeur du rapport Ti/Tc :

- le diagramme de la puissance des impulsions en fonction du temps. La puissance P, en watts, est portée en ordonnées suivant une échelle logarithmique; le temps T, en secondes, est porté en abscisses suivant une échelle proportionnelle usuelle;
- une vue en plan montrant la forme des microcratères;
- une vue en coupe (A - A') montrant le profil des microcratères.

Dans tous les cas, on a traité la surface d'un cylindre de laminoir au moyen d'un faisceau laser pulsé à une fréquence de 10 kHz et présentant une puissance moyenne de 750 W. La durée d'un cycle complet est donc Tc = 100 μs. Le cylindre est en rotation autour de son axe; sa vitesse périphérique V est la même dans tous les cas et elle n'influence dès lors pas la comparaison des résultats obtenus.

## Premier exemple

On a opéré avec une durée d'impulsion Ti = 50 μs, ce qui a conduit à un rapport Ti/Tc = 0,5.

Le diagramme de la figure 1 montre que la puissance réelle de l'impulsion atteint théoriquement 1500 W, pour une puissance moyenne de 750 W, soit un gain de l'ordre de 100 % compte tenu de faibles pertes inévitables.

La figure 1 montre également que les microcratères ont une forme ovalisée et qu'ils présentent un bourrelet asymétrique assez marqué.

Ces conditions géométriques sont exprimées par les relations :

$$c_1 < 4\ a_1$$
$$a_1 \cong b_1$$
$$\frac{a_1 + b_1}{v} = 100\ \mu s,$$

les paramètres a et b étant explicités dans la figure 1.

La rugosité qui en résulte n'est pas parfaitement isotrope, mais elle est encore acceptable.

Deuxième exemple

On a utilisé une durée d'impulsion $Ti = 10\ \mu s$ et par conséquent un rapport $Ti/Tc = 0,1$.

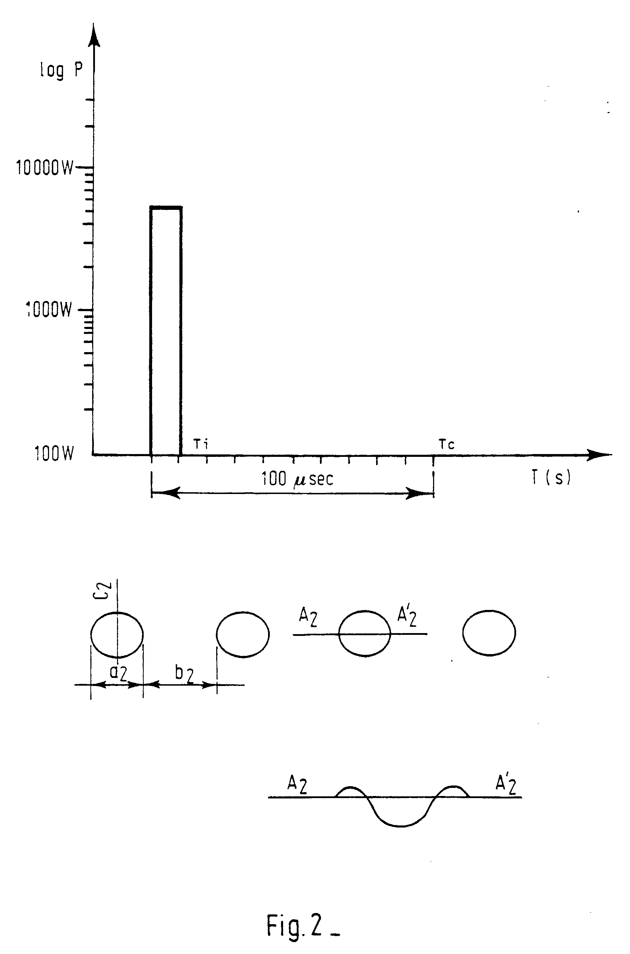

La figure 2 montre que la puissance de l'impulsion peut ici atteindre 7500 W; les microcratères sont caractérisés par les relations :

$$a_2 \ll b_2$$
$$c_2 < 1,5\ a_2$$
$$\frac{a_2 + b_2}{v} = 100\ \mu s.$$

L'isotropie de la rugosité est nettement améliorée.

Troisième exemple

La durée de l'impulsion valait ici $Ti = 3\ \mu s$ et le rapport $Ti/Tc = 0,03$.

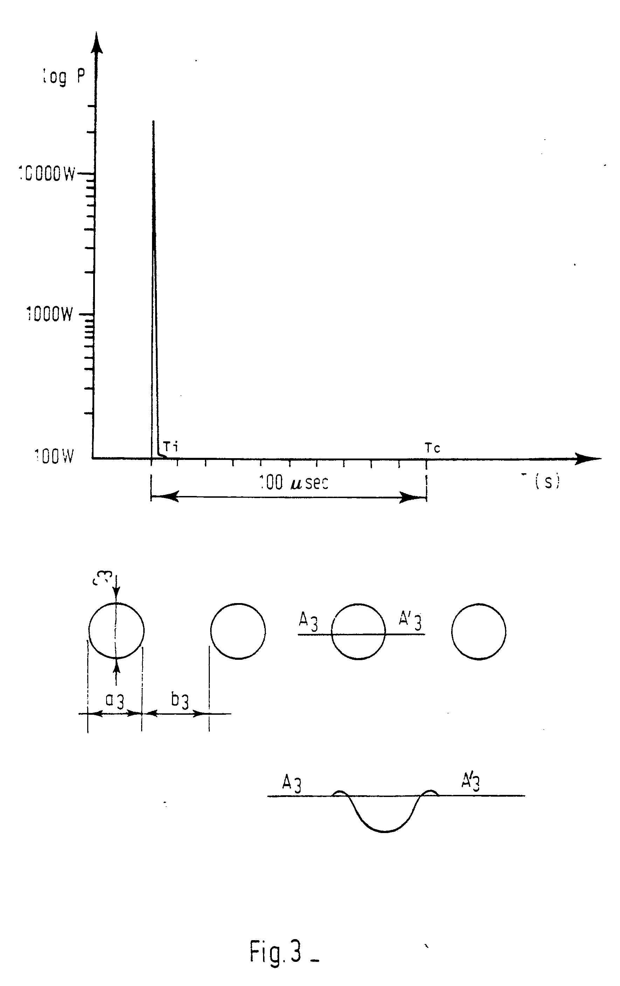

Comme le montre la figure 3, la puissance d'une impulsion peut dépasser 20 kW, ce qui conduit à des microcratères pratiquement circulaires, définis par les relations :

$$a_3 \cong c_3$$
$$a_3 \ll b_3$$
$$\frac{a_3 + b_3}{v} = 100\ \mu s.$$

La rugosité résultante présente une isotropie pratiquement parfaite.

Il faut encore souligner que dans tous les cas, la valeur absolue des paramètres a et c dépend également de la puissance du faisceau laser et du débit d'oxygène. Ces deux grandeurs ont été maintenues constantes dans les trois exemples ci-dessus, afin de faire ressortir l'influence du rapport Ti/Tc.

**Revendications**

1. Procédé pour former des microperforations à la surface d'un cylindre de laminoir à l'aide d'un faisceau laser pulsé, dans lequel chaque impulsion dudit faisceau laser provoque, par fusion locale de la surface dudit cylindre et refoulement du métal fondu, la formation d'une microperforation constituée d'un bourrelet en relief entourant un microcratère, caractérisé en ce que chaque impulsion dudit faisceau contient une même quantité d'énergie et en ce que l'on règle la durée (Ti) des impulsions dudit faisceau laser à une valeur comprise entre environ 3 % et environ 60 % de la durée totale (Tc) d'un cycle dudit faisceau laser.

2. Procédé suivant la revendication 1, caractérisé en ce que l'on insuffle dans la zone d'impact du faisceau laser pulsé un jet d'oxygène suivant une direction parallèle à l'axe dudit faisceau laser pulsé.

3. Procédé suivant la revendication 2, caractérisé en ce que ledit jet d'oxygène est coaxial audit faisceau laser pulsé.

4. Procédé suivant l'une ou l'autre des revendications 2 et 3, caractérisé en ce que ledit jet d'oxygène est pulsé.

5. Procédé suivant l'une ou l'autre des revendications 1 à 4, caractérisé en ce que l'on emmagasine au moins une partie de l'énergie disponible dans la source laser, mais non transmise sous forme de faisceau pendant un temps de repos (Tr) et en ce que l'on ajoute cette énergie emmagasinée à l'énergie de l'impulsion laser émise par ladite source pendant le temps d'impulsion (Ti) suivant, afin d'augmenter la puissance de ladite impulsion laser suivante.

**Claims**

1. Method for forming microperforations on the surface of a rolling-mill roll with the aid of a pulsed laser beam, in which each pulse of the said laser beam causes, by local melting of the surface of the said roll and upflow of the molten metal, the formation of a microperforation consisting of a raised bead surrounding a microcrater, characterised in that each pulse of the said beam contains the same amount of energy and in that the duration (Ti) of the pulses of the said laser beam is adjusted to a value of between approximately 3 % and approximately 60 % of the total duration (Tc) of a cycle of the said laser beam.

2. Method according to Claim 1, characterised in that a jet of oxygen is blown into the impact zone of the pulsed laser beam, in a direction parallel to the axis of the said pulsed laser beam.

3. Method according to Claim 2, characterised in that the said jet of oxygen is coaxial with the said pulsed laser beam.

4. Method according to either of Claims 2 and 3, characterised in that the said jet of oxygen is pulsed.

5. Method according to one of Claims 1 to 4, characterised in that at least a portion of the energy available in the laser source but not transmitted in the form of a beam is stored for a rest time (Tr) and in that this stored energy is added to the energy of the laser pulse emitted by the said source during the subsequent pulse time (Ti), in order to increase the power of the said subsequent laser pulse.

**Patentansprüche**

1. Verfahren zum Bilden von Mikroperforationen auf der Oberfläche einer Walzwerkwalze mit Hilfe eines gepulsten Laserstrahls, bei dem jeder Impuls jenes Laserstrahls durch das örtliche Schmelzen der Oberfläche jener Walze und das Aufstauchen des geschmolzenen Metalls die Bildung einer Mikroperforation hervorruft, die aus einem einen Mikrokrater umgebenden, erhabenen Wulst besteht, dadurch gekennzeichnet, daß jeder Impuls jenes Strahls die gleiche Energiemenge hat und daß die Dauer (Ti) der Impulse jenes Laserstrahls auf einen Wert zwischen etwa 3% und etwa 60% der Gesamtdauer (Tc) eines Zyklus jenes Laserstrahls eingestellt wird.

2. Verfahren nach Anspruch 1, dadurch gekennzeichnet, daß parallel zur Achse jenes gepulsten Laserstrahls ein Sauerstoffstrahl in den Auftreffbereich des gepulsten Laserstrahls eingeleitet wird.

3. Verfahren nach Anspruch 2, dadurch gekennzeichnet, daß jener Sauerstoffstrahl koaxial zu jenem gepulsten Laserstrahl verläuft.

4. Verfahren nach Anspruch 2 oder 3, dadurch gekennzeichnet, daß jener Sauerstoffstrahl gepulst ist.

5. Verfahren nach einem der Ansprüche 1 bis 4, dadurch gekennzeichnet, daß mindestens ein Teil der Energie, die in der Laserquelle zur Verfügung steht, aber während einer Ruheperiode (Tr) nicht in Strahlform emittiert wird, gespeichert wird und daß jene gespeicherte Energie zur Verstärkung des darauffolgenden Laserimpulses der Laserimpulsenergie hinzugefügt wird, die während der darauffolgenden Impulszeit (Ti) von jener Quelle emittiert wird.

Fig.1_

Fig. 2 _

Fig. 3 _